# EUROPÄISCHE PATENTSCHRIFT

(11) **EP 3 627 245 B1**
(45) Veröffentlichungstag und Bekanntmachung des Hinweises auf die Patenterteilung: **04.09.2024**
(21) Anmeldenummer: 19197901.2
(22) Anmeldetag: 17.09.2019
(51) Int. Cl.: G05B 9/02, G05B 19/418, G08C 25/00, G08C 19/02

(54) **ELEKTRONISCHE AKTUATORSTEUEREINHEIT UND STEUERUNGSANORDNUNG FÜR TECHNISCHE ANLAGEN**
ELECTRONIC ACTUATOR CONTROL UNIT AND CONTROL ARRANGEMENT FOR TECHNICAL INSTALLATIONS
UNITÉ DE COMMANDE D'ACTIONNEUR ÉLECTRONIQUE ET DISPOSITIF DE COMMANDE POUR INSTALLATIONS TECHNIQUES

(30) Priorität: 19.09.2018 DE 102018123074
(43) Veröffentlichungstag der Anmeldung: 25.03.2020
(73) Patentinhaber: Valeo Thermal Commercial Vehicles Germany GmbH, 82205 Gilching (DE)
(72) Erfinder: Redelberger, Harald, 82205 Gilching (DE)
(74) Vertreter: Strasser, Wolfgang

(56) Entgegenhaltungen:
- DE-A1- 102005 060 025
- DE-A1- 102015 118 151
- DE-A1- 102016 105 263

## Beschreibung

Die Erfindung betrifft eine Steuerungsanordnung für technische Anlagen mit einer elektronischen Zentral-Steuereinheit und wenigstens einer Gruppe von mehreren Aktuatoren, jedem von denen eine elektronische Aktuator-Steuereinheit zugeordnet ist, gemäß dem Oberbegriff von Anspruch 1.

Unter dem Ausdruck "Aktuator" werden im vorliegenden Fall insbesondere Lüfter, Pumpen, Kompressoren und dergleichen verstanden. Bei den hier betrachteten technischen Anlagen kann es sich beispielsweise um Klimaanlagen von Großraumfahrzeugen wie Bussen und dergleichen handeln, bei denen häufig mehrere Aktuatoren, zum Beispiel die Axialgebläse und/oder die Radialgebläse der Klimaanlage insofern jeweils zu einer Gruppe zusammengefasst sind, als einer ihrer Betriebsparameter, beispielsweise ihre Drehzahl, ständig den gleichen momentanen Sollwert besitzt. Dieser wird von einer elektronischen Zentral-Steuereinheit als vorgebbare, zeitlich veränderliche Variable an die peripher angeordneten elektronischen Aktuator-Steuereinheiten gesandt.

Dabei findet ein periodisches Trägersignal Verwendung, auf das die von der Zentral-Steuereinheit an die Aktuator-Steuereinheiten zu übertragende Information durch Modulation aufgeprägt ist. Diese Information wird von jeder der Aktuator-Steuereinheiten durch Demodulation des Trägersignals erfasst und dazu verwendet, den ihr zugeordneten Aktuator auf den von der Zentral-Steuereinheit vorgegebenen Sollwert einzuregeln.

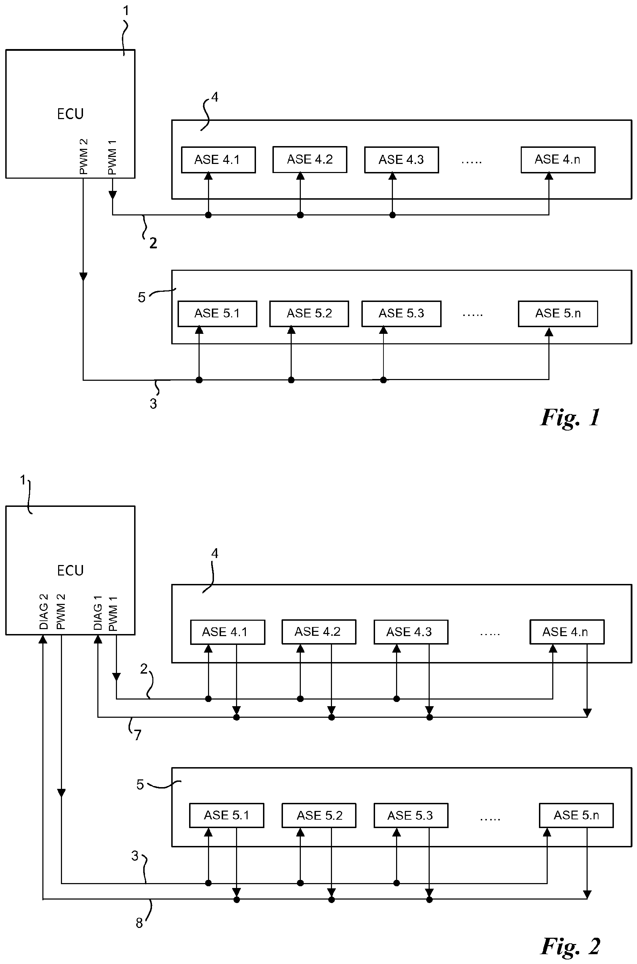

Eine vergleichsweise einfache Form einer solchen, aus der Praxis bekannten Steuerungsanordnung ist in Fig. 1 wiedergegeben, die eine elektronische Zentral-Steuereinheit 1 mit zwei Signalausgängen PWM1 und PWM2 zeigt, von denen der eine über eine erste Befehls-Signalleitung 2 mit den Signaleingängen der Aktuator-Steuereinheiten ASE 4.1 bis ASE 4.n einer ersten Aktuatorgruppe 4 verbunden ist, bei denen es sich beispielsweise um die Axialgebläse einer Aufdachklimaanlage handeln kann, während der andere über eine zweite Befehls-Signalleitung 3 mit den Signaleingängen der Aktuator-Steuereinheiten ASE 5.1 bis ASE 5.n einer zweiten Aktuatorgruppe 5 verbunden ist, bei denen es sich um die Radialgebläse dieser Aufdachklimaanlage handeln kann, mit deren Hilfe dem Fahrzeuginnenraum gekühlte Luft zugeführt werden kann. n ist in diesem Zusammenhang eine ganze Zahl größer 1, d.h. es gilt n = 2, 3, 4 usw.

Auf jeder dieser Befehls-Signalleitungen 2, 3 gibt die Zentral-Steuereinheit 1 ein Trägersignal ab, auf das jeweils ein Vorgabe-Sollwert für die betreffende Aktuatorgruppe aufmoduliert ist. Der Vorgabe-Sollwert für die Aktuatorgruppe 4 wird im Regelfall einen anderen momentanen Wert aufweisen, als der Vorgabe-Sollwert für die Aktuatorgruppe 5, da die Drehzahlen der Aktuatoren zwar innerhalb einer jeden Gruppe gleich, von Gruppe zu Gruppe im Allgemeinen aber verschieden sind. Die Spannungsversorgungsleitungen (Systemmasse und U_{B}) sind in sowohl Fig. 1 als auch der nachfolgen erläuterten Fig. 2 der Einfachheit halber weggelassen.

Nachteilig an der gezeigten Anordnung ist, dass die Aktuator-Steuereinheiten ASE 4.1 bis ASE 4.n bzw. ASE 5.1 bis ASE 5.n einer jeden Aktuatorgruppe 4, 5 über die betreffende Befehls-Signalleitung 2 bzw. 3 jeweils parallel an den zugehörigen Signalausgang PWM1 bzw. PWM2 der Zentral-Steuereinheit 1 angeschlossen sind, sodass dessen Belastung von der Zahl n der in einer Gruppe vorhandenen Aktuatoren abhängt. In der Praxis führt dies dazu, dass diese Signalausgänge überdimensioniert werden müssen, um nicht für jede Anlage mit Aktuatorgruppen unterschiedlicher Mitgliederzahl eine gesonderte Zentral-Steuereinheit herstellen und vorhalten zu müssen.

Auch muss jede der Befehls-Signalleitungen 2, 3 eine Anzahl n-1 von Y-Verzweigungen aufweisen, die nur um 1 kleiner ist als die Anzahl n der in einer Gruppe vorhandenen Aktuatoren.

Eine Rückmeldung darüber, ob die Aktuatoren tatsächlich der jeweiligen Sollwert-Vorgabe entsprechend arbeiten, ist bei der Anordnung aus Fig. 1 nicht möglich. Zu diesem Zweck ist es vielmehr erforderlich, dass man jede der Aktuator-Steuereinheiten mit einem Rückmeldeausgang ausstattet und diese Rückmeldeausgänge mit Hilfe von zusätzlichen Rückmeldeleitungen 7, 8 gruppenweise mit jeweils einem zusätzlich benötigten Rückmeldeeingang DIAG1 bzw. DIAG2 der Zentral-Steuereinheit 1 verbindet, wie dies in Fig. 2 dargestellt ist; in dieser sind bereits in Fig. 1 gezeigte Einheiten mit den gleichen Bezugszeichen wie dort bezeichnet.

Allerdings kann bei einer solchen Anordnung nur erkannt werden, ob alle Aktuatoren einer Gruppe korrekt arbeiten oder nicht. Tritt auf einer der Rückmeldeleitungen 7, 8 ein Fehlersignal auf, so ist die Identifizierung des hierfür ursächlichen Aktuators nicht möglich. Überdies muss auch jede der Rückmeldeleitungen 7, 8 n-1 Y-Verzweigungen aufweisen, wie dies oben bereits für die Signalleitungen 2, 3 erwähnt wurde.

Um für jeden der Aktuatoren eine individuelle Funktions-Diagnosemöglichkeit zu schaffen, ist es nach dem Stand der Technik üblich, jede der Aktuator-Steuereinheiten über eine gesonderte Rückmeldeleitung mit der Zentral-Steuereinheit zu verbinden, was zu einem erheblichen Verdrahtungsaufwand führt und die Zahl der Rückmeldeeingänge an der Zentral-Steuereinheit 1 beträchtlich erhöht.

Weiterhin sind aus der DE 10 2015 118 151 A1 Sicherheitssensoren zur Überwachung der Betriebssicherheit einer Anlage bekannt, die auch als Aktuator-Steuereinheiten Verwendung finden können und daher im Folgenden als solche bezeichnet werden. Diese bekannten Steuereinheiten können in der Weise so miteinander zu einer seriellen Kette verschaltet sein, dass mit Ausnahme der ersten und der letzten Steuereinheit jede zwischen einer stromaufwärts benachbarten und einer stromabwärts benachbarten Aktuator-Steuereinheit angeordnet ist, und ihre beiden Signalanschlüsse mit jeweils einem Signalanschluss einer dieser beiden Nachbar-Aktuator-Steuereinheiten verbunden sind. Am stromaufwärtigen Ende der Kette befindet sich eine Zentral-Steuereinheit, deren der betreffenden Gruppe von Aktuatoren zugeordneter Signalanschluss nur mit einem einzigen Signalanschluss, nämlich dem der ersten, sich unmittelbar an die Zentral-Steuereinheit anschließenden Aktuator-Steuereinheit verbunden ist. Er muss daher unabhängig von der Anzahl der Aktuator-Steuereinheiten der anzusteuern Aktuatorgruppe lediglich so ausgelegt werden, dass er den Signalanschluss einer einzigen Aktuator-Steuereinheit sicher treiben kann.

Demnach kann ein und dieselbe Zentral-Steuereinheit zur Ansteuerung von Aktuatorgruppen unterschiedlichster Länge verwendet werden, wodurch sich für die Hersteller von solchen Steuerungsanordnungen die Breite des mit einer einzigen Zentral-Steuereinheit abdeckbaren Produktspektrums erheblich vergrößert und die Lagerhaltung wesentlich vereinfacht.

Auch ist keine ununterbrochen durchgehende Befehls-Signalleitung vorhanden, sodass keine Y-Verzweigungen benötigt werden.

Wenn bei einer derart aufgebauten Steuerungsanordnung jeder der Signalanschlüsse je nach seiner Position in der Kette nur als Eingangs- oder als Ausgangs-Anschluss ausgebildet wäre, könnte ein Informationsfluss nur ausgehend von der Zentral-Steuereinheit stromabwärts erfolgen.

Um einen bidirektionalen Informationsfluss zu ermöglichen, sind alle zum Aufbau einer Kette miteinander verbundenen Signalanschlüsse so ausgebildet, dass sie sowohl als Eingangs- als auch als Ausgangs-Anschluss arbeiten können. Dies eröffnet für jede der Aktuator-Steuereinheiten eine Rücklesemöglichkeit, sodass die Logikschaltung, welche die Steuereinheit bildet, jederzeit überprüfen kann, ob an ihrem stromabwärtigen Signalanschluss das richtige Signal bzw. Potenzial anliegt.

Jede der Aktuator-Steuereinheiten ist mit einer Diagnoseeinheit ausgestattet, die überprüft, ob der zugehörige Aktuator korrekt arbeitet. Solange dies der Fall ist, hält die aus der DE 10 2015 118 151 A1 bekannte Aktuator-Steuereinheit ihren stromaufwärtigen Signalanschluss auf einem konstanten ersten Spannungspegel und erzeugt dann, wenn die Diagnoseeinheit eine Fehlfunktion feststellt, dadurch eine Fehlermeldung, dass sie diesen Signalanschluss auf einen zweiten, vom ersten. Spannungspegel verschiedenen, konstanten Spannungspegel zieht.

Jedem dieser beiden im Prinzip konstanten Spannungspegel können sowohl die Zentral-Steuereinheit als auch jede der Aktuator-Steuereinheiten zusätzlich digitale Impulse aufprägen, durch die Diagnosedaten und dergleichen kodiert werden und deren Amplitude wesentlich kleiner ist als der Abstand der beiden Spannungspegel.

Bei dieser bekannten Anordnung werden für eine stromaufwärts erfolgende Fehlermeldung keine zusätzlichen Leitungen benötigt; sie kann in der Kette so lange weitergegeben werden, bis sie bei der Zentral-Steuereinheit anliegt, die daraufhin einen entsprechenden Alarm auslösen kann.

Wie man sieht, ist die bisher beschriebene Steuerungsanordnung in der Lage, eine bidirektionale Informationsübertragung durchzuführen, ohne dass hierfür eine der in Verbindung mit Fig. 2 beschriebenen zusätzlichen Rückmeldeleitungen erforderlich ist. Irgendwelche Y-Verzweigungen sind nicht erforderlich.

Zwar ist die bekannte Anordnung primär für eine Kette von Sicherheitssensoren ausgebildet, die Rückmeldungen über auftretende Fehlfunktionen an die Zentral-Steuereinheit liefern sollen, und die Ansteuerung von Aktuatoren stellt nur einen Nebenaspekt dar. Doch wird hier auch eine bidirektionale Informationsübertragung zwischen zu einer seriellen Kette verschalteten Aktuator-Steuereinheiten und der Zentral-Steuereinheit ermöglicht, ohne dass hierfür zusätzliche Verbindungsleitungen benötigt werden.

Der Erfindung liegt die Aufgabe zugrunde, eine Steuerungsanordnung der im Oberbegriff von Anspruch 1 genannten Art so weiterzubilden, dass sie für die Ansteuerung einer Kette von gleichartigen Aktuatoren optimiert ist und gleichzeitig eine vereinfachte, Fehlalarme vermeidende Fehlererkennung ermöglicht.

Zur Lösung dieser Aufgabe sieht die Erfindung die im Anspruch 1 zusammengefassten Merkmale vor.

Dadurch, dass jede Aktuator-Steuereinheit dann, wenn die ihr zugeordnete Diagnoseeinheit ein Fehlersignal abgibt, ihren stromaufwärtigen Signalanschluss wiederholte Male und in vorgebbaren zeitlichen Abständen für jeweils den gleichen Zeitraum auf das feste elektrische Potenzial zieht, kann die Zentral-Steuereinheit diese gleichen langen Fehlermeldungen abzählen und einen Alarm beispielsweise erst dann auslösen, wenn ein vorgebbarer Zählwert überschritten wird. Dies hat den Vorteil, dass bei Störungen, die nach kurzer Zeit von selbst wegfallen, kein unnötiger Alarm ausgelöst wird. Beispielsweise kann der Fall eintreten, dass ein Gebläse aufgrund einer vorübergehenden Verschmutzung oder Schneebelastung zeitweise nicht mit der korrekten Drehzahl arbeitet, diese aber ohne weiteres Eingreifen einer Bedienungsperson wieder erreicht, wenn die Verschmutzung herausgefallen oder die Schneelast abgetaut ist.

Allerdings erhält die Zentral-Steuereinheit ohne weitere Maßnahmen auch hier nur eine Pauschalinformation darüber, dass in der betreffenden Gruppe ein Aktuator nicht einwandfrei arbeitet.

Um eine eindeutige Identifizierung des das Fehlersignal auslösenden Aktuators durch die Zentral-Steuereinheit zu ermöglichen, ist daher vorzugsweise vorgesehen, dass jede Aktuator-Steuereinheit, die dadurch eine Fehlermeldung erhält, dass ihr stromabwärtiger Signalanschluss von der benachbarten Aktuator-Steuereinheit für eine bestimmte Zeitspanne auf das fest vorgegebene Potenzial gelegt wird, dies nicht für eine gleich lange Zeitspanne an ihrem stromaufwärtigen Signalanschluss wiederholt, sondern diesen für eine um eine vorgebbare Zeitdifferenz verlängerte Zeitspanne blockiert.

Dies hat zur Folge, dass die Zeitspanne, für die der zugehörige Signalanschluss der Zentral-Steuereinheit auf das in Rede stehende festgelegte Potenzial gezogen wird, um so länger ist, je weiter der das Fehlersignal auslösende Aktuator in der Kette von der Zentral-Steuereinheit entfernt ist, d.h. je mehr Aktuator-Steuereinheiten zwischen ihm und der Zentral-Steuereinheit liegen. Da gemäß der Erfindung jede dieser dazwischen liegenden Aktuator-Steuereinheiten eine bekannte, genau definierte Zeitspanne addiert, kann die Zentral-Steuereinheit aus der zeitlichen Länge der bei ihr ankommenden Fehlermeldung ermitteln, welcher Aktuator der betreffenden Gruppe deren Auslöser ist.

Diese und weitere vorteilhafte Ausgestaltungen der Erfindung sind in den Unteransprüchen niedergelegt.

Die Erfindung wird im Folgenden anhand eines Ausführungsbeispiels unter Bezugnahme auf die Zeichnung beschrieben; in dieser zeigen:
- Fig. 1: eine aus dem Stand der Technik bekannte Steuerungsanordnung für zwei Aktuator-Gruppen ohne Diagnosemöglichkeit,
- Fig. 2: eine ebenfalls aus dem Stand der Technik bekannte Steuerungsanordnung für zwei Aktuator-Gruppen mit eingeschränkter Diagnosemöglichkeit, und
- Fig. 3: eine Steuerungsanordnung mit einer Aktuator-Gruppe gemäß der Erfindung mit uneingeschränkter Diagnosemöglichkeit.

In den Figuren werden für einander entsprechende Komponenten gleiche Bezugszeichen verwendet.

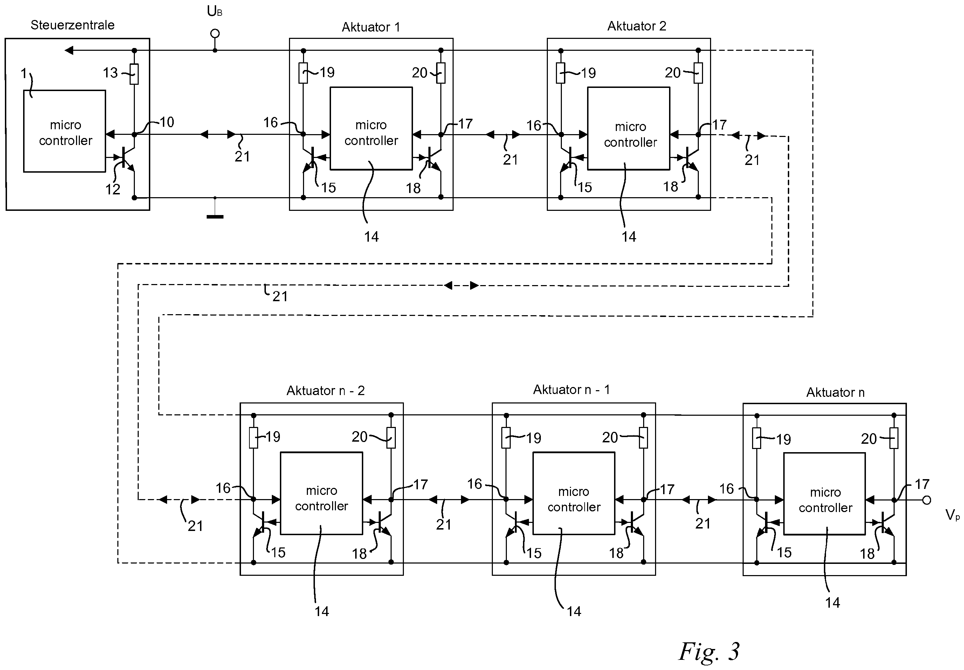

Sowohl die Zentral-Steuereinheit 1 als auch die Aktuator-Steuereinheiten sind in Fig. 3 als Mikroprozessoren dargestellt. Stattdessen können aber auch beliebige andere elektronische Logikschaltungen verwendet werden, wenn sie in der Lage sind, die hier im Zusammenhang mit der Erfindung beschriebenen Funktionen zu implementieren.

Die Zentral-Steuereinheit 1 der in Fig. 3 gezeigten, erfindungsgemäßen Anordnung besitzt ebenso wie die Zentral-Steuereinheiten der in den Fig. 1 und 2 gezeigten Steuerungsanordnungen für jede Aktuatorgruppe (von denen in Fig. 3 nur eine einzige dargestellt ist) einen einzigen Signalanschluss 10. Dabei ist dieser Signalanschluss 10 so ausgebildet, dass er sowohl als Ausgangs- als auch als Eingangs-Anschluss arbeiten, d.h. Digitalsignale sowohl aussenden als auch empfangen und auswerten kann.

Für den erstgenannten Zweck ist ein von der Zentral-Steuereinheit 1 ansteuerbarer Transistor 12 vorgesehen, mit dessen Hilfe der am Signalanschluss 10 herrschende Spannungspegel zwischen dem Massepotenzial und einem durch einen Pull-up-Widerstand 13 gegenüber der Versorgungsspannung U_{B} vorgegebenen positiven Potenzial hin und her geschaltet werden kann, um beispielsweise ein pulsweitenmoduliertes Digitalsignal zu erzeugen.

Weiterhin ist der Signalanschluss 10 der Zentral-Steuereinheit 1 gemäß der Erfindung mit einer Rücklese-Funktion ausgestattet, so dass die Zentral-Steuereinheit 1 das an diesem Signalanschluss 10 auftretende Signal unabhängig von seiner Herkunft zu erkennen und zu verarbeiten vermag. Dies versetzt sie in die Lage, zu überprüfen, ob das am Signalanschluss 10 vorhandene Signal dem von ihr dem Transistor 12 zugeführten Steuersignal entspricht, oder ob es durch ein von der stromabwärts folgenden Aktuator-Steuereinheit 14 stromaufwärts abgegebenes Signal verändert ist, wie dies im Folgenden noch genauer erläutert wird.

Der Aufbau aller in Fig. 3 gezeigten Aktuator-Steuereinheiten 14 ist gleich. Jede von ihnen besitzt zwei Signalanschlüsse 16, 17, die im Prinzip die gleichen Eigenschaften besitzen, wie der Signalanschluss 10 der Zentral-Steuereinheit 1, d.h. jeder von ihnen kann durch einen Transistor 15 bzw. 18, der jeweils von der betreffenden Aktuator-Steuereinheit 14 angesteuert wird, zwischen dem Massepotenzial und einem durch einen Pull-up-Widerstand 19 bzw. 20 bezüglich der Versorgungsspannung U_{B} vorgegebenen positiven Potenzial hin und her geschaltet werden. Dabei besitzen alle Pull-up-Widerstände 19, 20 vorzugsweise den gleichen Wert, sodass die erwähnten positiven Potenziale an den Signalanschlüssen 16 oder 17 gleich sind.

Auch weist jede der Aktuator-Steuereinheiten 14 an ihren beiden Signalanschlüssen 16, 17 die bereits erwähnte Rücklese-Funktion auf, sodass sie einerseits überprüfen kann, ob die dort auftretenden Signale den von ihr an ihre Transistoren 15 bzw. 18 abgegebenen Steuersignalen entsprechen, oder ob sie von außen her durch von den benachbarten Aktuator-Steuereinheiten abgegebene Signale verändert sind.

Zur Bildung einer Kette ist der stromabwärtige Signalanschluss 17 einer jeden Aktuator-Steuereinheit 14 über einen zur bidirektionalen Signalübertragung dienenden Leitungsabschnitt 21 mit dem stromaufwärtigen Signalanschluss 16 der sich stromabwärts anschließenden Aktuator-Steuereinheit 14 verbunden.

Diese Kette kann eine nahezu beliebige Länge aufweisen, d.h. beliebig viele Aktuator-Steuereinheiten 14 umfassen, wie dies in Fig. 3 durch eine gestrichelte Darstellung der entsprechenden Leitungsverbindungen 21 angedeutet ist. Wesentlich ist, dass bei dieser Anordnung keine durchgehende Signalleitung vorhanden ist, sondern eine bidirektionale Signalübertragung über die Vielzahl einzelner, voneinander getrennter Leitungsabschnitte 21 erfolgt, die jeweils den stromabwärtigen Signalanschluss 17 einer stromaufwärtigen Aktuator-Steuereinheit 14 mit dem stromaufwärtigen Signalanschluss 16 der stromabwärts benachbarten Aktuator-Steuereinheit 14 verbinden.

Wie Fig. 3 zeigt, ist der stromaufwärtige Signalanschluss 16 der sich unmittelbar an die Zentral-Steuereinheit 1 anschließenden Aktuator-Steuereinheit 14 mit dem Signalanschluss 10 der Zentral-Steuereinheit 1 ebenfalls über einen Leitungsabschnitt 21 verbunden, während der stromabwärtige Signalanschluss 16 der am weitesten von der Zentral-Steuereinheit 1 entfernten Aktuator-Steuereinheit 14 auf ein festes Potenzial V_{P} gelegt ist. Hieran kann diese Aktuator-Steuereinheit 14 über ihre Rücklese-Funktion erkennen, dass sie die letzte, d.h. am weitesten von der Zentral-Steuereinheit 1 entfernte Einheit der Kette ist.

Gemäß der Erfindung kann die eben beschriebene Steuerungsanordnung in folgender Weise betrieben werden:
Der Grund- oder Regelbetrieb besteht darin, dass die Zentral-Steuereinheit 1 ein pulsweitenmoduliertes Digitalsignal erzeugt, das von ihrem Signalanschluss 10 über den Leitungsabschnitt 21 an den stromaufwärtigen Signalanschluss 16 der nächstliegenden Aktuator-Steuereinheit 14 abgegeben und von dieser in unveränderter Form an ihren stromabwärtigen Signalanschluss 17 übertragen wird, von dem es über den nachfolgenden Leitungsabschnitt 21 an die nächste Aktuator-Steuereinheit 14 gelangt, um so bis zur letzten Aktuator-Steuereinheit 14 der Kette weitergegeben zu werden. Auf diese Weise erhalten alle Aktuator-Steuereinheiten 14 das gleiche pulsweitenmodulierte Digitalsignal, dessen Tastverhältnis einen gemeinsamen, gezielt veränderbaren Sollwert für einen Betriebsparameter, beispielsweise für die Drehzahl von die Aktuatoren bildenden Gebläsen vorgibt.

Dabei ist es nicht erforderlich, dass der gesamte Bereich, über den hinweg das Tastverhältnis des pulsweitenmodulierten Digitalsignals veränderlich ist, für die Sollwert-Übertragung verwendet wird. Beispielsweise kann ein Tastverhältnis des Digitalsignals von 30 % einer maximalen Rückwärts-Drehzahl der Gebläse zugeordnet sein, die dann in dem Maße auf die Drehzahl 0 abnimmt, in dem das Tastverhältnis auf 60 % ansteigt, um sich dann bei einem weiteren Anstieg des Tastverhältnisses auf 90 % bis zur maximalen Gebläse-Drehzahl zu erhöhen.

Der untere Veränderungsbereich des Tastverhältnisses von beispielsweise 10 % bis 30 % kann dann zur Übertragung anderer Informationen an die Aktuator-Steuereinheiten 14, beispielsweise für eine aktive Diagnosefunktion genutzt werden, wie dies weiter unten noch genauer erläutert wird.

Aufgrund des oben beschriebenen Aufbaus der Aktuator-Steuereinheiten-Kette ist aber auch eine stromaufwärts erfolgende Informationsübertragung zur Zentral-Steuereinheit 1 hin möglich, die beispielsweise für eine präzise Lokalisierung eines fehlerhaft arbeitenden Aktuators verwendet werden kann.

Zu diesem Zweck ist jede der Aktuator-Steuereinheiten mit einer (nicht dargestellten) Diagnoseeinheit ausgestattet, die überwacht, ob beim zugehörigen Aktuator der Ist-Wert des durch das pulsweitenmodulierte Digitalsignal gesteuerten Betriebsparameters mit dem vorgegebenen Sollwert übereinstimmt, der Aktuator also beispielsweise mit der korrekten Drehzahl arbeitet.

Wenn dies nicht der Fall ist, erzeugt die betreffende Diagnoseeinheit ein Fehlersignal, aufgrund dessen die zugehörige Aktuator-Steuereinheit 14 mithilfe ihres Schalttransistors 18 ihren stromaufwärtigen Signalanschluss 16 ungeachtet des vom stromabwärtigen Signalanschlusses 10 bzw. 17 der jeweils vorausgehenden Einheit (Zentral-Steuereinheit 1 oder Aktuator-Steuereinheit 14) abgegebenen Signals für eine vorgebbare Zeitdauer beispielsweise auf Massepotenzial (active low) zieht, und dadurch das von der Zentral-Steuereinheit 1 kommende pulsweitenmodulierte Digitalsignal unterdrückt.

Diese Fehlermeldung kann vom stromabwärtigen Signalanschluss 17 der stromaufwärts benachbarten Aktuator-Steuereinheit 14 erkannt (gelesen) und an ihren stromaufwärtigen Signalanschluss 16 weitergegeben werden usw., bis sie letztendlich am Signalanschluss 10 der Zentral-Steuereinheit 1 anliegt und das von dieser im Grundbetrieb permanent abgegebene pulsweitenmodulierte Digitalsignal unterdrückt.

Damit die Zentral-Steuereinheit 1 erkennen kann, von welcher Aktuator-Steuereinheit 14 die ihr zugeführte Fehlermeldung stammt, könnten die Aktuator-Steuereinheiten 14 einer Kette so programmiert sein, dass jede von ihnen beim Auftreten einer Störung eine Fehlermeldung mit individueller zeitlicher Länge abgibt, anhand derer die Zentral-Steuereinheit 1 die absendende Aktuator-Steuereinheit 14 identifizierten kann.

Dies würde allerdings bedeuten, dass die Aktuator-Steuereinheiten 14 erst beim Aufbau einer konkreten Steuerungsanordnug programmiert werden könnten und bei einem später eventuell erforderlichen Austausch einer defekt gewordenen Aktuator-Steuereinheit 14 eine entsprechende Nachprogrammierung erfolgen müsste.

Zur Vermeidung dieses Aufwandes ist gemäß einer besonders bevorzugten Ausführungsform der Erfindung vorgesehen, dass die Fehlermeldungen, welche die Aktuator-Steuereinheiten 14 dann abgeben, wenn die zugehörige Diagnoseschaltung eine Fehlfunktion anzeigt, für alle Aktuator-Steuereinheiten 14 die gleiche zeitliche Länge T₀ besitzen, dass darüber hinaus aber jede Aktuator-Steuereinheit 14, die eine solche Fehlermeldung von einer stromabwärts benachbarten Aktuator-Steuereinheit 14 erhält, an ihrem stromaufwärtigen Signalanschluss eine Fehlermeldung abgibt, deren zeitliche Länge um einen vorbestimmten Betrag ΔT vergrößert ist, der für alle Aktuator-Steuereinheiten 14 den gleichen Wert besitzen kann.

Dadurch erhöht sich die zeitliche Länge T einer bei der Zentral-Steuereinheit 1 ankommenden Fehlermeldung für jede Aktuator-Steuereinheit 14, die zwischen der die ursprüngliche Fehlermeldung erzeugenden Aktuator-Steuereinheit 14 und der Zentral-Steuereinheit 1 liegt um den Wert ΔT, woraus die Zentral-Steuereinheit 1 ermitteln kann, welche Aktuator-Steuereinheit 14 die ursprüngliche Fehlermeldung erzeugt hat.

Stellt beispielsweise die erste, unmittelbar auf die Zentral-Steuereinheit 1 folgende Aktuator-Steuereinheit 14 fest, dass ihr zugehörige Aktuator nicht korrekt arbeitet, so gibt sie über ihren stromaufwärtigen Signalanschluss 16 eine Fehlermeldung mit der zeitlichen Länge T₀ an die Zentral-Steuereinheit 1 ab. Tritt der Fehler jedoch beispielsweise bei der fünften stromabwärts von der Zentral-Steuereinheit 1 angeordneten Aktuator-Steuereinheiten 14 auf, so erzeugt diese eine Fehlermeldung mit der Zeitdauer T₀ und jede der vier zwischen ihr und der Zentral-Steuereinheit 1 liegenden Aktuator-Steuereinheiten 14 verlängert diese um jeweils ΔT, sodass die Zentral-Steuereinheit 1 eine Fehlermeldung mit der zeitlichen Länge T = T₀ + 4 * ΔT erhält. Dadurch kann sie die absendende Aktuator-Steuereinheit 14 eindeutig identifizieren
Vorzugsweise werden die zeitlichen Längen T₀ und ΔT so gewählt, dass sie wesentlich größer sind, als die bei gegebener Impulsfolgefrequenz des pulsweitenmodulierten Digitalsignals maximal möglichen Zeitabstände der Digitalsignal-Impulse. Mit anderen Worten: Die Informationsübertragung in stromaufwärtiger Richtung erfolgt in einem völlig anderen, wesentlich niedrigeren Frequenzbereich als die Informationsübermittlung stromabwärts.

Für die oben erwähnte aktive Diagnosemöglichkeit kann beispielsweise der Tastverhältnis-Bereich des pulsweitenmodulierten Digitalsignals verwendet werden, der nicht zur Übertragung des Vorgabe-Sollwertes dient. So kann ein von der Zentral-Steuereinheit 1 ausgesandtes pulsweitenmoduliertes Digitalsignal mit einem Tastverhältnis in einem Bereich von 10 % bis 20 %, beispielsweise von 15 % von den Aktuator-Steuereinheiten 14 als Diagnose-Aufforderung verstanden werden, die sie veranlasst, zu überprüfen, ob die stromabwärts benachbarte Aktuator-Steuereinheit 14 arbeitet. Ist dies der Fall, wird diese Aufforderung so lange stromabwärts weitergegeben, bis die Aktuator-Steuereinheit 14 mit dem größten Abstand von der Zentral-Steuereinheit 1 erreicht ist, deren stromabwärtiger Signalanschluss 17 auf dem bereits erwähnten fest vorgegebenen Potenzial V_{P} liegt.

Falls eine der Aktuator-Steuereinheiten 14 bei Erhalt der Diagnose-Aufforderung feststellt, dass ihr stromabwärtiger Nachbar nicht reagiert, kann sie dies an ihren stromaufwärtigen Signalanschluss durch die Abgabe einer Fehlermeldung signalisieren, deren zeitliche Länge T_{F} von der der oben erwähnten Fehlermeldung T₀ verschieden ist. Diese kann dann stromaufwärts in der gleichen Weise an die Zentral-Steuereinheit 1 zurückgesandt werden, wie dies oben beschrieben wurde, d.h. so, dass jede weiterleitende Aktuator-Steuereinheit 14 die zeitliche Länge T_{F} um eine Zusatzzeit ΔT verlängert, die gleich der obigen Zusatzzeit ΔT oder von dieser verschieden sein kann.

Es versteht sich, dass die zeitlichen Längen der beiden verschiedenen Fehlermeldungen T₀ und T_{F} so stark voneinander verschieden sein müssen, dass es durch die Aufsummierung der in der jeweiligen Kette maximal möglichen Zusatzzeiten ΔT zu keinen Überschneidungen bzw. Verwechslungen kommen kann.

### Somit bietet die hier beschriebene Anordnung folgende Vorteile:

Die Zentral-Steuereinheit 1 benötigt für jede durch sie zu steuernde Aktuatoren-Gruppe nur einen einzigen Signalanschluss.

Unabhängig von der Länge der Aktuatoren-Gruppe muss dieser Signalanschluss nur so dimensioniert werden, dass er einen einzigen Signalanschluss einer Aktuator-Steuereinheit 14 treiben kann.

Die Einheiten der hier beschriebenen Steuerungsanordnung sind mit der jeweiligen Nachbareinheit nur durch eine einfache Signalleitung verbunden. Irgendwelche Y-Verzweigungen sind nicht erforderlich.

Trotz dieses minimalen Verdrahtungsaufwandes können alle Einheiten sowohl mit ihrem jeweiligen stromabwärtigen Nachfolger als auch ihrem jeweiligen stromaufwärtigen Vorgänger in bidirektionalen Informationsaustausch treten; dies gilt mit Ausnahme der Zentral-Steuereinheit 1, die nur mit ihrer unmittelbar stromabwärts benachbarten Aktuator-Steuereinheit 14 in bidirektionalen Datenaustausch treten kann, und der von der Zentral-Steuereinheit 1 am weitesten entfernten Aktuator-Steuereinheit 14, für die eine bidirektionale Datenaustausch nur mit der stromaufwärts benachbarten Aktuator-Steuereinheit 14 möglich ist.

Alle Aktuator-Steuereinheiten 14 besitzen einen identischen Aufbau und können in identischer Weise programmiert sein, sodass sich ein minimaler Herstellungsaufwand und eine minimale Lagerhaltung ergeben.

Es ist sowohl eine aktive als auch eine passive Diagnosemöglichkeit vorhanden, die jeweils eine eindeutige Identifizierung des ein Fehlersignal auslösenden Aktuators ermöglicht.

## Patentansprüche

1. Steuerungsanordnung für technische Anlagen mit einer elektronischen Zentral-Steuereinheit (1) und wenigstens einer Gruppe von mehreren Aktuatoren, jedem von denen eine elektronische Aktuator-Steuereinheit (14) zugeordnet ist, die jeweils zwei voneinander getrennte Signalanschlüsse (16, 17) aufweist, die so ausgebildet sind, dass jeder von ihnen sowohl als Signal-Eingangs- als auch als Signal-Ausgangs-Anschluss arbeiten kann,
- wobei wenigstens zwei solche Aktuator-Steuereinheiten (14) derart miteinander zu einer seriellen Kette verbunden sind, dass mit Ausnahme der ersten und der letzten Aktuator-Steuereinheit (14) jede zwischen einer stromaufwärts benachbarten und einer stromabwärts benachbarten Aktuator-Steuereinheit (14, 14) angeordnet ist und mit ihrem stromaufwärtigen Signalanschluss (16) mit dem stromabwärtigen Signalanschluss (17) der stromaufwärts benachbarten Aktuator-Steuereinheit (14) und mit ihrem stromabwärtigen Signalanschluss (17) mit dem stromaufwärtigen Signalanschluss (16) der stromabwärts benachbarten Aktuator-Steuereinheit (14) verbunden ist,
- wobei die den Kettenanfang bildende, sich unmittelbar stromabwärts an die Zentral-Steuereinheit (1) anschließende Aktuator-Steuereinheit (14) mit ihrem stromaufwärtigen Signalanschluss (16) mit einem der Gruppe von Aktuatoren zugeordneten Signalanschluss (10) der Zentral-Steuereinheit (1) verbunden ist, der ebenfalls so ausgebildet ist, dass er sowohl als Eingangs- als auch als Ausgangs-Anschluss arbeiten kann,
- wobei weiterhin jede Aktuator-Steuereinheit (14) so ausgebildet ist, dass sie ein in einem Regelbetrieb permanent an ihrem stromaufwärtigen Signalanschluss (16) empfangenes Signal wiederholt und unverändert an ihren stromabwärtigen Signalanschluss (17) überträgt, und
- wobei jede der Aktuator-Steuereinheiten (14) mit einer Diagnoseeinheit ausgestattet ist, die beim Auftreten einer Fehlfunktion des zugehörigen Aktuators ein Fehlersignal erzeugt,
- wobei der mit der Kette von Aktuator-Steuereinheiten (14) verbundene Signalanschluss der Zentral-Steuereinheit (1) im Regelbetrieb permanent ein pulsweitenmoduliertes Digitalsignal abgibt, dessen veränderbares Tastverhältnis einen gemeinsamen, gezielt veränderbaren Soll-Wert für einen Betriebsparameter vorgibt,
- wobei die einer jeden Aktuator-Steuereinheit (14) zugeordnete Diagnoseeinheit das Fehlersignal dann erzeugt, wenn der zugehörige Aktuator nicht entsprechend dem durch das pulsweitenmodulierte Digitalsignal vorgegebenen Sollwert arbeitet, und
- wobei jede der Aktuator-Steuereinheiten (14) so ausgebildet ist, dass sie dann, wenn die zu ihr gehörende Diagnoseeinheit ein Fehlersignal erzeugt, dadurch eine Fehlermeldung abgibt, dass sie an ihren stromaufwärtigen Signalanschluss (16) für eine vorgebbare Zeitspanne ein fest vorgebbares elektrisches Potenzial anlegt,
- wodurch das von der Zentral-Steuereinheit (1) kommende pulsweitenmodulierte Digitalsignal während dieser Zeitspanne unterdrückt und der stromaufwärts benachbarten Aktuator-Steuereinheit (14) das Vorliegen einer Fehlfunktion angezeigt wird, die dann ihrerseits ihren stromaufwärtigen Signalanschluss (16) auf das fest vorgebbare elektrische Potenzial legt,
**dadurch gekennzeichnet, dass** jede Aktuator-Steuereinheit (14) der Steuerungsanordnung dann, wenn die ihr zugeordnete Diagnoseeinheit ein Fehlersignal abgibt, ihren stromaufwärtigen Signalanschluss (16) wiederholte Male in vorgebbaren zeitlichen Abständen für jeweils den gleichen Zeitraum auf das feste elektrische Potenzial zieht.

2. Steuerungsanordnung nach Anspruch 1, **dadurch gekennzeichnet, dass** jede ihrer Aktuator-Steuereinheiten (14) dann, wenn ihr stromabwärtiger Signalanschluss (17) vom stromaufwärtigen Signalanschluss (16) der stromabwärts benachbarten Aktuator-Steuereinheit (14) für einen vorgebbaren Zeitraum auf ein fest vorgegebenes elektrisches Potenzial gezogen wird, ihren stromaufwärtigen Signalanschluss (16) für einen Zeitraum auf ein fest vorgegebenes elektrisches Potenzial zieht, der um ein vorgebbares Zeitintervall (ΔT) länger ist als der der Zeitraum, für den die stromabwärts benachbarte Aktuator-Steuereinheit (14) ihren stromaufwärtigen Signalanschluss auf das feste elektrische Potenzial zieht.

3. Steuerungsanordnung nach einem der Ansprüche 1 oder 2, **dadurch gekennzeichnet, dass** der stromabwärtige Signalanschluss (17) der das Kettenende bildenden Aktuator-Steuereinheit (14) auf ein festes Potenzial gelegt ist.

4. Steuerungsanordnung nach einem der vorhergehenden Ansprüche, **dadurch gekennzeichnet, dass** der Bereich, innerhalb dessen das Tastverhältnisses des pulsweitenmodulierten Digitalsignals veränderbar ist, wenigstens zwei Teilbereiche umfasst, von denen nur einer für die Übertragung der veränderbaren Vorgabe-Sollwerte dient.

5. Steuerungsanordnung nach Anspruch 2 **dadurch gekennzeichnet, dass** ein nicht für die Übertragung der veränderbaren Vorgabe-Sollwerte dienender Änderungsbereich des Tastverhältnisses des pulsweitenmodulierten Digitalsignals für eine aktive Einzelabfrage der Funktionsbereitschaft der einzelnen Aktuatoren durch die Zentral-Steuereinheit (1) Verwendung findet.

## Claims

1. Control arrangement for technical installations with an electronic central control unit (1) and at least one group of several actuators, each of which is assigned an electronic actuator control unit (14), having two separate signal connections (16, 17) which are designed in such a way that each of them can function both as a signal input connection and as a signal output connection,
- wherein at least two such actuator control units (14) are connected together to form a serial chain in such a way that, with the exception of the first and the last actuator control unit (14), each is arranged between an upstream neighbouring and a downstream neighbouring actuator control unit (14, 14) and is connected with its upstream signal connection (16) to the downstream signal connection (17) of the upstream neighbouring actuator control unit (14) and with its downstream signal connection (17) to the upstream signal connection (16) of the downstream neighbouring actuator control unit (14),
- wherein the actuator control unit (14) forming the start of the chain and immediately arranged downstream of the central control unit (1) is connected by its upstream signal connection (16) to a signal connection (10) of the central control unit (1) associated with the group of actuators, which signal connection is also designed such that it can function both as an input connection and as an output connection,
- wherein further each actuator control unit (14) is designed such that, in a regular mode of operation, it permanently repeats a signal received at its upstream signal connection (16) and transmits it unchanged to its downstream signal connection (17), and
- wherein each of the actuator control units (14) is equipped with a diagnostic unit which generates a fault signal when a malfunction of the associated actuator occurs,
- wherein the signal connection of the central control unit (1), which is connected to the chain of actuator control units (14), in the regular mode of operation, permanently emits a pulse-width-modulated digital signal, the variable duty cycle of which specifies a common, specifically variable target value for an operating parameter,
- wherein the diagnostic unit associated with each actuator control unit (14) generates the error signal if the associated actuator does not operate in accordance with the target value specified by the pulse-width modulated digital signal, and
- wherein each of the actuator control units (14) is designed such that, when the diagnostic unit associated with it generates an error signal, it emits an error message by applying a fixed predeterminable electrical potential to its upstream signal connection (16) for a predeterminable period of time,
- whereby the pulse-width-modulated digital signal coming from the central control unit (1) is suppressed during this period of time and the presence of a malfunction is indicated to the upstream neighbouring actuator control unit (14), which in turn then applies the fixed electrical potential to its upstream signal connection (16),
**characterised in that** each actuator control unit (14) of the control arrangement, each time when the diagnostic unit assigned to it emits a fault signal, repeatedly pulls its upstream signal connection (16) to the fixed electrical potential at predeterminable time intervals for the same period of time.

2. Control arrangement according to claim 1, **characterised in that** each of its actuator control units (14), when its downstream signal terminal (17) is pulled to a fixed electrical potential by the upstream signal terminal (16) of the downstream adjacent actuator control unit (14) for a predeterminable period of time, pulls its upstream signal connection (16) to a fixed predetermined electrical potential for a period of time which is longer by a predeterminable time interval (ΔT) than the period of time for which the downstream neighbouring actuator control unit (14) pulls its upstream signal connection to the fixed electrical potential.

3. Control arrangement according to one of claims 1 or 2, **characterised in that** the downstream signal connection (17) of the actuator control unit (14) forming the end of the chain is connected to a fixed potential.

4. Control arrangement according to one of the preceding claims, **characterised in that** the range within which the duty cycle of the pulse-width-modulated digital signal can be changed comprises at least two sub-ranges, only one of which is used for transmitting the changeable target values.

5. Control arrangement according to claim 2, **characterised in that** a change range of the pulse duty factor of the pulse-width-modulated digital signal which is not used for the transmission of the variable target values is used for an active individual query of the functional readiness of the individual actuators by the central control unit (1).

## Revendications

1. Dispositif de commande pour installations techniques comprenant une unité de commande centrale électronique (1) et au moins un groupe de plusieurs actionneurs, à chacun desquels est associée une unité de commande d'actionneur électronique (14), qui présente respectivement deux connexions de signal (16, 17) séparées l'une de l'autre, qui sont conçues de telle sorte que chacune d'elles peut fonctionner aussi bien comme connexion d'entrée de signal que comme connexion de sortie de signal,
- au moins deux de ces unités de commande d'actionneur (14) étant reliées l'une à l'autre en une chaîne sérielle de telle sorte que, à l'exception de la première et de la dernière unité de commande d'actionneur (14), chacune est placée entre une unité de commande d'actionneur adjacente en amont et une unité de commande d'actionneur adjacente en aval (14, 14) et est reliée par sa connexion de signal amont (16) à la connexion de signal aval (17) de l'unité de commande d'actionneur (14) voisine en amont et par sa connexion de signal aval (17) à la connexion de signal amont (16) de l'unité de commande d'actionneur (14) voisine en aval,
- l'unité de commande d'actionneur (14) formant le début de la chaîne et se raccordant directement en aval à l'unité de commande centrale (1) étant reliée par sa connexion de signal (16) en amont à une connexion de signal (10) de l'unité de commande centrale (1) associée au groupe d'actionneurs, laquelle est également conçue de telle sorte qu'elle peut fonctionner aussi bien comme connexion d'entrée que comme connexion de sortie,
- chaque unité de commande d'actionneur (14) étant en outre conçue de manière à répéter et inchangée transmettre à sa connexion de signal aval (17) un signal reçu en permanence sur sa connexion de signal amont (16) en mode d' opération régulière,
- chacune des unités de commande d'actionneur (14) étant équipée d'une unité de diagnostic qui génère un signal d'erreur lors de l'apparition d'un dysfonctionnement de l'actionneur associé,
- la connexion de signal de l'unité de commande centrale (1), reliée à la chaîne d'unités de commande d'actionneur (14), émettant en permanence, en mode d' opération régulière, un signal numérique à modulation de largeur d'impulsion dont le rapport cyclique modifiable prédéfinit une valeur nominale commune, modifiable de manière ciblée, pour un paramètre de fonctionnement,
- l'unité de diagnostic associée à chaque unité de commande d'actionneur (14) génère le signal d'erreur lorsque l'actionneur correspondant ne fonctionne pas conformément à la valeur nominale prédéfinie par le signal numérique modulé en largeur d'impulsion, et
- chacune des unités de commande d'actionneur (14) étant conçue de telle sorte que, lorsque l'unité de diagnostic qui lui est associée génère un signal d'erreur, elle délivre un message d'erreur en appliquant à sa connexion de signal en amont (16), pendant un laps de temps pouvant être prédéfini, un potentiel électrique pouvant être prédéfini de manière fixe,
- ce qui a pour effet de supprimer le signal numérique modulé en largeur d'impulsion provenant de l'unité de commande centrale (1) pendant ce laps de temps et d'indiquer la présence d'un dysfonctionnement à l'unité de commande d'actionneur (14) voisine en amont, qui applique alors à son tour à sa connexion de signal (16) en amont un potentiel électrique pouvant être prédéterminé de manière fixe,
**caractérisé en ce que** chaque unité de commande d'actionneur (14) du dispositif de commande, lorsque l'unité de diagnostic qui lui est associée émet un signal d'erreur, applique à sa connexion de signal en amont (16) à plusieurs reprises un potentiel électrique fixe à des intervalles de temps pouvant être prédéfinis, à chaque fois pour la même période, tirée, est portée

2. Dispositif de commande selon la revendication 1, **caractérisé en ce que** chacune de ses unités de commande d'actionneur (14), lorsque à sa connexion de signal aval (17) est appliqué un potentiel électrique fixe prédéterminé par la connexion de signal amont (16) de l'unité de commande d'actionneur (14) voisine en aval pendant un intervalle de temps pouvant être prédéterminé, tire sa connexion de signal amont (16) vers un potentiel électrique fixe prédéterminée, pendant une durée supérieure d'un intervalle de temps (ΔT) prédéterminable à celle de la durée pendant laquelle l'unité de commande d'actionneur (14) voisine en aval tire sa connexion de signal amont vers le potentiel électrique fixe.

3. Dispositif de commande selon l'une des revendications 1 ou 2, **caractérisé en ce que** la connexion de signal aval (17) de l'unité de commande d'actionneur (14) formant l'extrémité de la chaîne est tirée à un potentiel fixe.

4. Dispositif de commande selon l'une des revendications précédentes, **caractérisé en ce que** la zone à l'intérieur de laquelle le rapport cyclique du signal numérique modulé en largeur d'impulsion est modifiable comprend au moins deux zones partielles dont une seule sert à la transmission des valeurs de nominales modifiables.

5. Dispositif de commande selon la revendication 2, **caractérisé en ce qu'**une zone de modification du rapport cyclique du signal numérique modulé en largeur d'impulsion qui ne sert pas à la transmission des valeurs nominales modifiables est utilisée pour une interrogation individuelle active de la disponibilité fonctionnelle des différents actionneurs par l'unité de commande centrale (1).
